Europäisches Patentamt

European Patent Office

Office européen des brevets

(19)

(11) EP 0 423 295 B1

# (12) FASCICULE DE BREVET EUROPEEN

(45) Date de publication et mention
de la délivrance du brevet:
**24.01.1996 Bulletin 1996/04**

(21) Numéro de dépôt: **90907095.5**

(22) Date de dépôt: **10.04.1990**

(51) Int Cl.$^6$: **G11B 7/135**, G11B 7/125,
G11B 7/09, G11B 7/08

(86) Numéro de dépôt international:
**PCT/FR90/00254**

(87) Numéro de publication internationale:
**WO 90/13117 (01.11.1990 Gazette 1990/25)**

## (54) DISPOSITIF DE LECTURE OPTIQUE POUR SUPPORT D'ENREGISTREMENT OPTIQUE

OPTISCHE LESEEINRICHTUNG FÜR EINEN OPTISCHEN AUFZEICHNUNGSTRÄGER

OPTICAL READING DEVICE FOR AN OPTICAL RECORDING MEDIUM

(84) Etats contractants désignés:
**DE GB NL**

(30) Priorité: **25.04.1989 FR 8905451**

(43) Date de publication de la demande:
**24.04.1991 Bulletin 1991/17**

(73) Titulaire: **THOMSON-CSF**
**F-75008 Paris (FR)**

(72) Inventeur: **LEHUREAU, Jean-Claude**
**F-91700 Ste-Geneviève-des-Bois (FR)**

(74) Mandataire: **Guérin, Michel et al**
**F-92402 Courbevoie Cédex (FR)**

(56) Documents cités:
EP-A- 0 022 682          EP-A- 0 222 238
EP-A- 0 241 372          EP-A- 0 255 173
FR-A- 2 538 580          JP-A-55 142 423

- **PATENT ABSTRACTS OF JAPAN, Volume 11,**
  **No. 362 (P-640) (2809) 26 Novembre 1987; &**
  **JP-A-62137737 (Nec Corp.) 20 Juin 1987**

## Description

La présente invention concerne un dispositif de lecture optique pour support d'enregistrement optique, plus particulièrement un dispositif de lecture optique utilisable en particulier dans les têtes de lecture des disques optiques désignées dans le commerce par des expressions telles que "compact discs", "Vidéo-Disques" ou "Disques Optiques Numériques".

Dans les dispositifs de lecture optique classiques, on utilise en général comme moyen de séparation de l'énergie lumineuse des prismes ou des miroirs semi-transparents positionnés pour que le faisceau réfléchi émergeant du dispositif de séparation soit dirigé selon une ligne sensiblement normale à la trajectoire du faisceau lumineux d'extraction. En conséquence, les dimensions notamment la largeur du dispositif de lecture, sont importantes. Ceci constitue un obstacle à la réduction des dimensions du système dans son ensemble.

Pour remédier à ces inconvénients, on a proposé, notamment dans la demande de brevet français N°2 538 580 au nom de Ploneer Electronic Corporation ou dans la demande de brevet français N°2 597 249 au nom de la Demanderesse, d'utiliser comme moyen de séparation un réseau de diffraction ou un réseau bi-réfringent. Dans ce cas, le faisceau réfléchi par la surface du support d'enregistrement optique est renvoyé vers des moyens de détection photo-sensibles qui se trouvent être alignés avec la source d'émission lumineuse sensiblement selon un même axe perpendiculaire au plan du support d'enregistrement. De ce fait, on obtient un dispositif de lecture optique beaucoup plus compact que les dispositifs antérieurs. Toutefois, pour réaliser facilement l'asservissement vertical du faisceau lumineux sur le support d'enregistrement, on utilise un réseau de diffraction donnant un effet d'astigmatisme sur le faisceau de détection. Dans ce cas, les moyens de détection sont situés dans un plan proche du plan conjugué du plan du disque à proximité de la source d'émission lumineuse. La position de ce plan doit être définie de manière très précise. En effet, ce plan correspond au plan focal du faisceau de détection lorsque l'ensemble est correctement focalisé. La position des moyens de détection étant importante, il s'en suit que les réglages de position étant réalisés, ils ne doivent plus être susceptibles de modifications dues, par exemple, à des déformations mécaniques du dispositif de lecture.

On a proposé en outre dans le brevet japonais JP-A-62137737 de NEC Corp., du 10 juin 1987, Patent abstracts of Japan vol. 11 n° 362 (P-640) du 26 novembre 1987, un dispositif de lecture du type décrit précédemment dans lequel un masque est utilisé pour introduire une disymétrie dans un faisceau réfléchi émergeant du dispositif de séparation. Ce document sert de base au préambule de la revendication 1.

On a proposé par ailleurs dans le brevet japonais JP 5514 2423 de Mitsubishi Electric Corp., du 7 novembre 1980, Patent abstracts of Japan vol 5 n° 013 (P-046) du 27 janvier 1981, un dispositif de lecture dans lequel le faisceau de retour modulé est renvoyé vers la source laser sans être séparé du faisceau aller ; la source laser sert alors de masque dans le faisceau de retour pour aider à asservir la focalisation du faisceau aller sur le disque.

La présente invention a donc pour but de remédier aux inconvénients cités ci-dessus en proposant un nouveau dispositif de lecture optique pour support d'enregistrement optique permettant de réaliser facilement l'asservissement vertical.

En conséquence, la présente invention a pour objet un dispositif de lecture optique d'un support d'enregistrement optique du type comportant :

- une source d'émission d'un premier faisceau lumineux selon un axe optique principal,
- un moyen de séparation pour diriger selon l'axe optique principal le premier faisceau vers la surface du support d'enregistrement et séparer un second faisceau obtenu par réflexion du premier faisceau sur la surface du support d'enregistrement de manière à former un troisième faisceau dirigé selon un axe optique secondaire,
- un moyen de focalisation prévu entre le moyen de séparation et la surface du support d'enregistrement pour focaliser le premier faisceau sur ladite surface,
- un masque pour introduire une disymétrie dans le troisième faisceau lorsque le premier faisceau n'est pas correctement focalisé sur le support d'enregistrement, et
- au moins un dispositif de détection recevant au moins une partie du troisième faisceau et fournissant au moins un signal électrique traduisant l'état de focalisation du premier faisceau sur le support d'enregistrement,

caractérisé en ce que le masque est constitué par au moins une partie de la surface extérieure de la source d'émission lumineuse, le moyen de séparation étant positionné et réalisé de telle sorte que le point de focalisation du troisième faisceau tombe sur ladite partie de surface extérieure de la source lumineuse lorsque le faisceau de lecture optique est correctement focalisé sur le support d'enregistrement.

Selon un mode de réalisation préférentiel, la source d'émission lumineuse est constituée par un laser réalisé dans une puce semi-conductrice. De ce fait, le masque est formé par une des arêtes antérieures de la puce, de préférence une arête latérale. Le masque peut aussi être formé par un des coins inférieurs de la puce.

D'autre part, pour éviter l'occultation du troisième faisceau par l'arête supérieure ou arrière de la source d'émission lumineuse, l'angle de déflexion du troisième faisceau est supérieur au demi-angle d'ouverture du moyen de focalisation, vu depuis la source lumineuse.

D'autres caractéristiques et avantages de la présente invention apparaîtront à la lecture de la description faite ci-après de différents modes de réalisation préférentiels et non limitatifs avec référence aux figures ci-annexées dans lesquelles :

- la figure 1 est une vue en coupe schématique d'un dispositif optique de lecture selon l'art antérieur utilisant un réseau bi-réfringent comme moyen de séparation du faisceau,
- la figure 2 est une vue en coupe schématique d'un dispositif de lecture optique selon un mode de réalisation de la présente invention,
- la figure 3 est une vue identique a celle de la figure 2 montrant le fonctionnement de la focalisation,
- les figures 4 et 5 sont des vues en plan schématiques montrant le positionnement des cellules de détection par rapport à la source d'émission et leur connexion, aux circuits électriques détecteurs d'erreur.

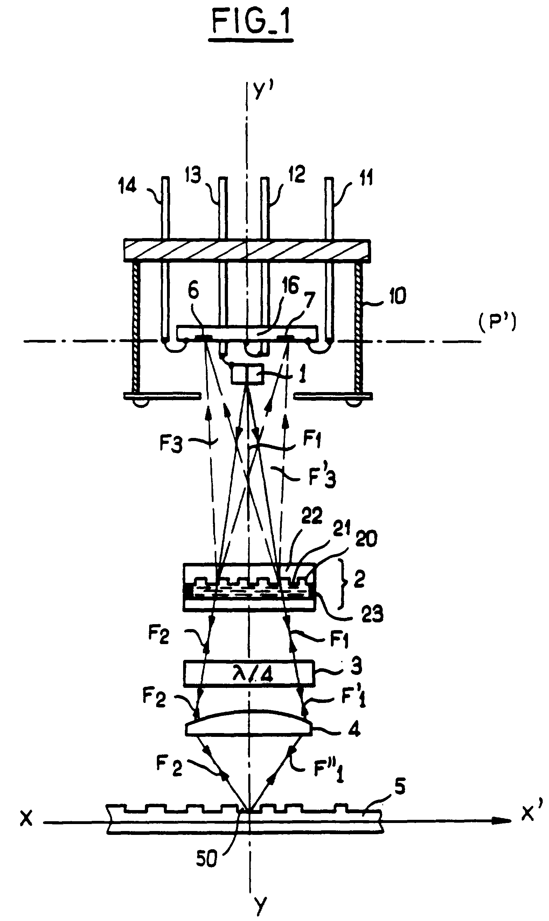

On décrira tout d'abord avec référence à la figure 1, un mode de réalisation d'un dispositif optique de lecture selon l'art connu, plus particulièrement un mode de réalisation d'un dispositif de lecture du type de celui décrit dans la demande de brevet français N° 2 597 249 au nom de la demanderesse.

Sur cette figure, le dispositif optique de lecture ainsi que le support d'enregistrement ou disque optique ont été représentés en coupe. Le plan du disque optique est constitué par l'axe XX' et les informations enregistrées sur le disque sont balayées selon cet axe XX'. D'autre part, comme représenté sur la figure 1, les différents éléments du dispositif optique de lecture sont alignés selon un axe YY' perpendiculaire au plan du support d'enregistrement, à savoir perpendiculaire à l'axe XX'.

Comme représenté sur la figure 1, le dispositif de lecture comporte :

- une source lumineuse 1, telle qu'une source laser placée sur l'axe YY' et émettant selon cet axe un premier faisceau F1 de lumière polarisée linéairement ;
- un séparateur 2 de faisceau par polarisation constitué par un réseau de phase 20 muni de sillons 21 situé à l'interface de deux milieux 22, 23 dont l'un 22 n'est pas biréfringent et l'autre 23 est biréfringent. Ce séparateur de faisceau 2 est placé perpendiculairement au faisceau F1 qu'il transmet sans modification en raison du type et de la direction de polarisation de la lumière ;
- une lame quart d'onde 3 recevant le faisceau F1 à polarisation linéaire et retransmettant ce faisceau sous forme d'un faisceau F'1 à polarisation circulaire ;
- une lentille de focalisation 4 focalisant le faisceau F'1 sous la forme d'un faisceau F"1 de façon à projeter un faisceau de lecture sur le disque optique 5 ;
- le disque optique 5 dont les informations désignées par la référence 50 passent successivement sous le faisceau de lecture F"1, et
- des dispositifs de détection 6 et 7 situés dans un plan P' non conjugué du plan du disque 5, à proximité de la source laser 1 de part et d'autre de l'axe YY', alignés selon une direction parallèle à l'axe XX', c'est-à-dire perpendiculairement à la direction YY'.

Le séparateur de faisceau 2 peut aussi être constitué soit d'un simple réseau de diffraction, comme dans la demande de brevet français N° 2 538 580, au nom de Pioneer, soit d'un prisme séparateur de polarisation tel qu'un prisme de Wollaston.

Dans le cas de la figure 1, on a représenté un réseau séparateur bi-réfringent qui, de plus, est muni de sillons gravés de manière à obtenir un effet d'astigmatisme sur le faisceau de détection.

Les photodétecteurs 6 et 7 sont intégrés sur un même ensemble ou puce 16 réalisé de préférence en silicium. Les photodétecteurs 6 et 7 ont pour rôle de détecter les erreurs de positionnement radial et vertical et de lire le signal porté par le disque.

Comme représenté sur la figure 1, la puce 16 contenant les photodétecteurs 6 et 7 ainsi que la source laser 1 sont assemblées dans le même boitier et prépositionnées l'une par rapport à l'autre. La lentille 4 peut être montée séparément ou solidairement du reste du montage pour suivre les erreurs radiales et verticales.

De plus, la source laser 1 et les éléments de la puce 16 tels que les photodétecteurs 6 et 7 sont raccordés par des connexions électriques 11, 12, 13, 14 à des circuits extérieurs non représentés.

Le fonctionnement du dispositif de lecture optique ainsi décrit tel que le faisceai de lecture F'1 est réfléchi par le disque sous forme d'un faisceau F2. En l'absence d'informations sur le disque 5, le faisceau F2 donne lieu, après transmission par la lentille 4, la lame quart d'onde 3 et le séparateur 2, à deux faisceaux diffractés F3, F'3 symétriques par rapport à l'axe YY' et de même intensité si l'ensemble est correctement focalisé. Ces faisceaux atteignent la puce 16 à l'emplacement des détecteurs 6 et 7 qui détectent une certaine quantité de lumière. Pour permettre la détection des erreurs d'asservissement vertical, le photodétecteur 7 est de préférence constitué de quatre photodétecteurs disposés en croix dans le plan P'. En conséquence, si le disque 5 se trouve à une distance correcte de la lentille 4, à savoir si le faisceau F"1 est correctement focalisé, le faisceau diffracté F'3 atteint les quatre photodétecteurs sous forme d'un cercle et éclaire de façon équivalente chaque détecteur. Toutefois, si la distance du disque 5 par rapport à la lentille 4 diffère par rapport au cas précédent ou si la lentille 4 est déplacée selon l'axe YY', le faisceau F'3 projette alors sur les photodétecteurs une image de forme elliptique à partir de laquelle on pourra obtenir un signal d'erreur. Pour que ce signal d'erreur soit exploitable, il est donc nécessaire que la puce 16 soit correctement positionnée par rapport à la source laser 1 et qu'il n'y ait pas de modifications de leurs distances respectives.

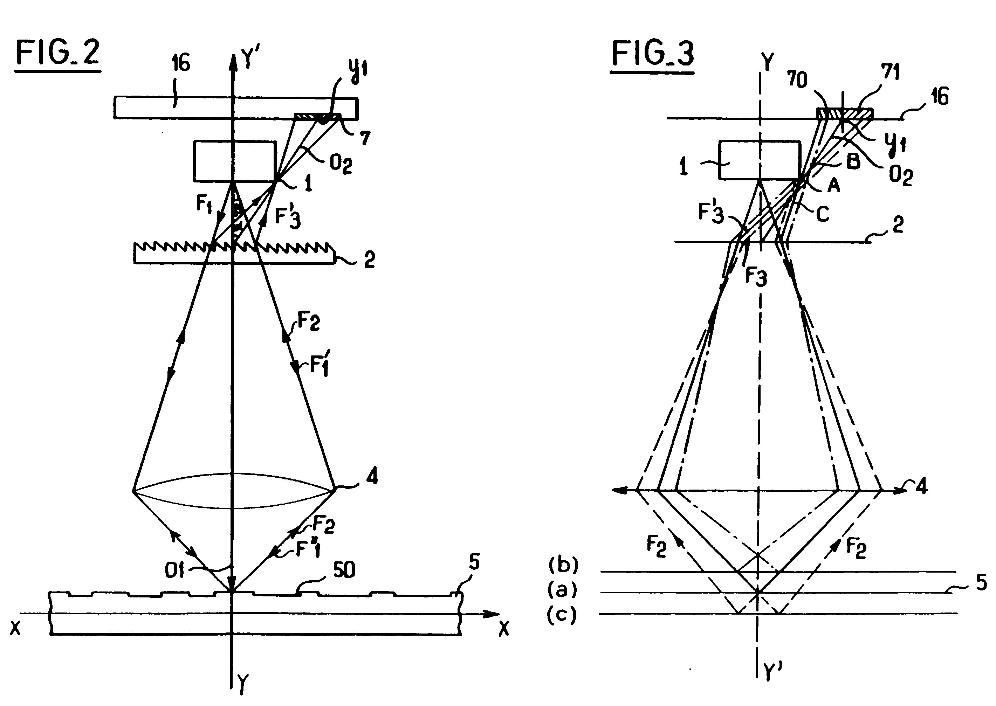

Pour remédier à cet inconvénient, on a proposé, comme représenté sur la figure 2, d'utiliser un réseau de diffraction tel que mentionné ci-dessus mais sans effet d'astigmatisme et d'utiliser un masque produisant une disymétrie dans le faisceau de diffraction F'3. Conformément à la présente invention, le masque est constitué par la source d'émission lumineuse 1 elle-même, à savoir la source laser. Plus particulièrement le masque est constitué par un des bords inférieurs de cette source d'émission lumineuse qui doit se trouver au point de focalisation du faisceau F'3 lorsque le faisceau émis par la source 1 est correctement focalisé sur le disque 5 comme représenté sur la figure 2. Pour pouvoir utiliser la source d'émission 1 comme masque, le moyen de séparation 2 doit être positionné et réalisé de manière spécifique. Le positionnement du moyen de séparation 2 est réalisé avant assemblage de la lentille de focalisation 4. On superpose l'image virtuelle issue de la faible partie du faisceau F1 diffractée par le moyen de séparation 2 sur l'arrête 1' de la source laser par translation et rotation du moyen de séparation.

Dans ce cas, le moyen de détection 7 réalisé dans la puce 16 n'a pas besoin d'être positionné de manière très précise par rapport à la source laser 1. En effet, dans ce cas, l'on examine l'intensité lumineuse captée par ce photodétecteur en champ éloigné et non plus au point de focalisation.

D'autre part, comme représenté sur la figure 2, pour éviter que le faisceau diffracté F'3 ne soit occulté par le bord supérieur de la source d'émission, l'angle de déflexion α du faisceau F'3 est supérieur au demi-angle d'ouverture β du moyen de focalisation 4 vu depuis la source lumineuse 1.

On expliquera le fonctionnement du masque avec référence à la figure 3 qui représente de manière très simplifiée le dispositif optique de la figure 2. Comme représenté sur les figures 2 et 3, le moyen de détection 7 dans ce cas est constitué d'au moins deux cellules détectrices 70, 71 qui sont symétriques par rapport à un plan parallèle à YY' et perpendiculaire à la puce 16, et passant par le point Y1 déterminé par le second axe optique O2. Aussi, lorsque le plan du disque 5 à lire est dans une position verticale correcte, représentée par la position a, le faisceau réfracté F'3 représenté par la ligne en trait solide se focalise en A et dans ce cas, les deux détecteurs 70 et 71 reçoivent une quantité égale de radiations. Lorsqu'il y a défocalisation, et que le plan du disque se trouve en position b, les faisceaux réfléchi F2 et réfracté F'3, suivent le chemin représenté par les lignes en tireté. Dans ce cas, le faisceau F'3 se focalise en B et le masque formé par la source 1 intercepte une partie du faisceau F'3 se dirigeant vers le détecteur 71. A l'inverse, lorsque le plan de la piste est en position c, les faisceaux réfléchi F2 et réfracté F'3 suivent le chemin représenté par les lignes en points et tirets. Le faisceau F'3 se focalise en C et les rayons se dirigeant vers le détecteur 70 sont intercepté par le masque 1. En traitant les signaux issus des deux détecteurs 70 et 71, on peut obtenir un signal d'erreur de focalisation qui permettra de corriger la focalisation par asservissement de manière bien connue de l'homme de l'art.

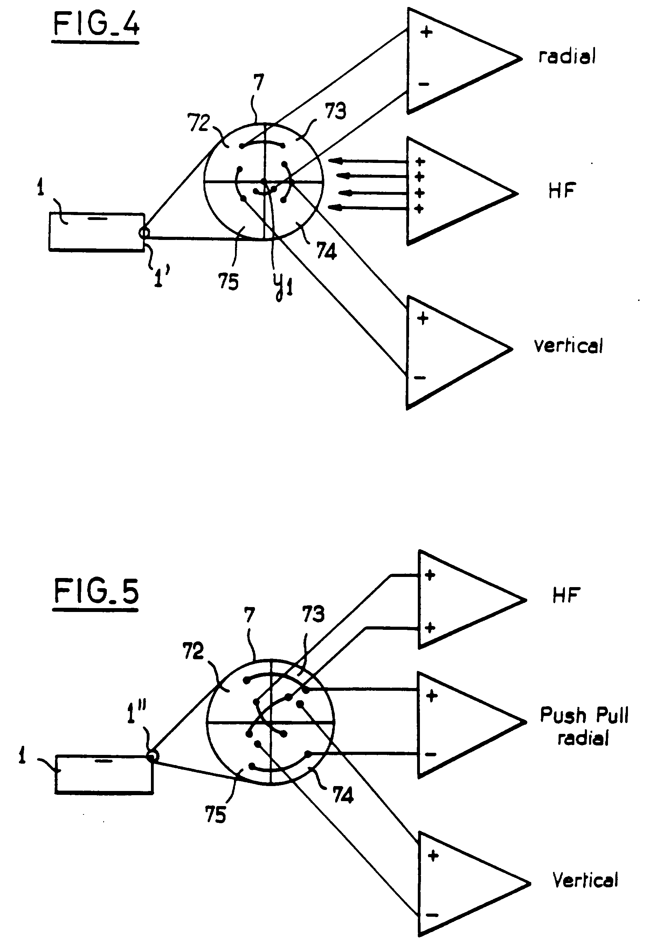

En général, la source lumineuse 1 est constituée par un laser semi-conducteur. Dans ce cas, la puce peut être découpée selon ses axes cristallins, ce qui donne des arêtes tout à fait rectilignes et fournit un masque sans défaut. D'autre part, comme représenté sur les figures 4 et 5, on peut utiliser comme masque soit les arêtes antérieures, de préférence les arêtes latérales 1' du laser mais on peut aussi utiliser comme masque un des coins antérieurs 1". Dans ce cas, au lieu d'occulter la moitié de la tâche de reflexion, on en occulte simplement un quart ce qui permet d'avoir plus de sensibilité sur les détecteurs.

De plus, comme représenté sur les figures 4 et 5, le détecteur 7 est, de préférence constitué de quatre cellules photodétecteurs 72, 73, 74, 75 montées en croix. Dans ce cas, le centre de la croix Y1 se trouve au point de rencontre de l'axe optique secondaire O2 avec le plan de la puce 16. Ceci permet d'utiliser le signal issu des détecteurs non seulement comme signal d'asservissement de focalisation, à savoir d'asservissement vertical mais aussi comme signal d'asservissement radial. Si l'on appelle S2, S3, S4, S5, les signaux issus respectivement des cellules 72, 73, 74 et 75, le signal d'asservissement radial sera obtenu en réalisant la fonction :

$$E^r = (S2 + S3) - (S4 + S5)$$

et le signal d'erreur d'asservissement vertical ou de focalisation sera obtenu en réalisant la fonction :

$$E^v = (S3 + S4) - (S2 + S5)$$

Il est aussi possible d'obtenir le signal de lecture HF à partir du détecteur 7 en réalisant la fonction :

$$S = S2 + S3 + S4 + S5$$

Ces fonctions sont réalisées de manière connue de l'homme de l'art, notamment en sommant ou en soustrayant les signaux dans des amplificateurs opérationnels comme représenté sur les figures 4 et 5.

Comme représenté sur la figure 5, l'asservissement vertical peut aussi être réalisé en utilisant simplement les signaux issus des cellules détectrices 73 et 75 et en faisant la différence :

$$E^v = S3 - S5$$

La figure 2 a été représenté sans lame quart d'onde. Toutefois, il est évident pour l'homme de l'art qu'une telle lame peut être utilisée, par exemple, entre le séparateur 2 et la lentille de focalisation 4 pour réduire éventuellement le bruit sur la source laser en évitant de renvoyer sur le laser de la lumière de même polarisation.

Le dispositif décrit ci-dessus présente une grande stabilité mécanique. En effet, le masque constitué par la source laser et l'image de retour se déplacent en même temps en cas de déformation mécaniques du dispositif de lecture optique.

## Revendications

1. Dispositif de lecture optique d'un support d'enregistrement optique du type comportant :

   - une source d'émission (1) d'un premier faisceau lumineux (F1) selon un axe optique principal (01),
   - un moyen de séparation (2) pour diriger selon l'axe optique principal le premier faisceau vers la surface du support d'enregistrement (5) et séparer un second faisceau (F2) obtenu par réflexion du premier faisceau sur la surface du support d'enregistrement de manière à former un troisième faisceau (F'3) dirigé selon un axe optique secondaire,
   - un moyen de focalisation (4) prévu entre le moyen de séparation et la surface du support d'enregistrement pour focaliser le premier faisceau sur ladite surface,
   - un masque (1', 1") pour introduire une disymétrie dans le troisième faisceau lorsque le premier faisceau F1 n'est pas correctement focalisé sur le support d'enregistrement, et
   - au moins un dispositif de détection (7) recevant au moins une partie du troisième faisceau (F'3) et fournissant au moins un signal électrique traduisant l'état de focalisation du premier faisceau sur le support d'enregistrement,

   caractérisé en ce que le masque (1', 1") est constitué par au moins une partie de la surface extérieure de la source d'émission lumineuse (1), le moyen de séparation (2) étant positionné et réalisé de telle sorte que le point de focalisation du troisième faisceau (F'3) tombe sur ladite partie de surface extérieure de la source lumineuse lorsque le faisceau de lecture optique (F1) est correctement focalisé sur le support d'enregistrement.

2. Dispositif de lecture optique selon la revendication 1, caractérisé en ce que la source d'émission lumineuse (1) est constituée par un laser réalisé dans une puce semi-conductrice, le masque (1') étant formé par une des arêtes antérieures de la puce.

3. Dispositif de lecture optique selon la revendication 2, caractérisé en ce que le masque est formé par une des arêtes latérales antérieures de la puce.

4. Dispositif de lecture optique selon la revendication 1, caractérisé en ce que la source d'émission lumineuse (1) est constituée par un laser réalisé dans une puce semi-conductrice, le masque (1") étant formé par un des coins antérieurs de la puce.

5. Dispositif de lecture optique selon l'une quelconque des revendications 2 à 4, caractérisé en ce que la puce semi-conductrice est rectifiée selon ses axes cristallins.

6. Dispositif de lecture optique selon l'une quelconque des revendications 1 à 5, caractérisé en ce que l'angle de deflexion (α) du troisième faisceau est supérieur au demi-angle d'ouverture (β) du moyen de focalisation, vu depuis la source lumineuse.

7. Dispositif de lecture optique selon l'une quelconque des revendications 1 à 6, caractérisé en ce que le dispositif de détection est constitué par au moins deux cellules photo-détectrices (70, 71) disposées dans un plan parallèle au plan du support d'enregistrement, de part et d'autre d'un plan perpendiculaire au plan du support et passant par le point de rencontre de l'axe optique secondaire (02) avec le plan parallèle.

8. Dispositif de lecture optique selon l'une quelconque des revendications 1 à 7, caractérisé en ce que le dispositif de détection est constitué par quatre cellules photodétectrices (72, 73, 74, 75) disposées en croix dans un plan parallèle au plan du support, le centre de la croix (Y1) se trouvant au point de rencontre de l'axe optique secondaire (02) avec le plan parallèle.

9. Dispositif de lecture optique selon l'une quelconque des revendications 1 à 8, caractérisé en ce que le moyen de séparation (2) est constitué par un réseau de diffraction, un réseau bi-réfringent ou un prisme séparateur de polarisation tel qu'un prisme de Wollaston.

10. Dispositif de lecture optique selon l'une quelconque des revendications 1 à 9, caractérisé en ce qu'il comporte de plus une lame quart d'onde située entre le moyen de séparation (4) et le support d'enregistrement (5).

## Patentansprüche

1. Optische Leseeinrichtung für einen optischen Aufzeichnungsträger des Typs, der enthält:

   - eine Quelle (1) zum Senden eines ersten Lichtstrahlenbündels (F1) längs einer optischen Hauptachse (01),
   - ein Trennmittel (2), um das erste Strahlenbündel längs der optischen Hauptachse auf die Oberfläche des Aufzeichnungsträgers (5) zu richten und ein zweites Strahlenbündel (F2), das durch Reflexion des ersten Strahlenbündels an der Oberfläche des Aufzeichnungsträgers erhalten wird, in der Weise zu trennen, daß ein drittes Strahlenbündel (F'3) gebildet wird, das längs einer sekundären optischen Achse gerichtet ist,

- ein Fokussierungsmittel (4), das zwischen dem Trennmittel und der Oberfläche des Aufzeichnungsträgers vorgesehen ist, um das erste Strahlenbündel auf der Oberfläche zu fokussieren,

- eine Maske (1', 1"), um in das dritte Strahlenbündel eine Asymmetrie einzuführen, wenn das erste Strahlenbündel (F1) nicht korrekt auf dem Aufzeichnungsträger fokussiert ist, und

- wenigstens eine Erfassungseinrichtung (7), die wenigstens einen Teil des dritten Strahlenbündels (F'3) empfängt und wenigstens ein elektrisches Signal liefert, das den Fokussierungszustand des ersten Strahlenbündels auf dem Aufzeichnungsträger wiedergibt,

dadurch gekennzeichnet, daß die Maske (1', 1") wenigstens durch einen Teil der äußeren Oberfläche der Lichtsendequelle (1) gebildet ist, wobei das Trennmittel (2) so positioniert und verwirklicht ist, daß der Brennpunkt des dritten Strahlenbündels (F'3) auf diesen Teil der äußeren Oberfläche der Lichtquelle fällt, wenn das optische Lesestrahlenbündel (F1) auf dem Aufzeichnungsträger korrekt fokussiert ist.

2. Optische Leseeinrichtung nach Anspruch 1, dadurch gekennzeichnet, daß die Lichtsendequelle (1) durch einen Laser gebildet ist, der in einem Halbleiterchip verwirklicht ist, wobei die Maske (1') durch eine der vorderen Kanten des Chips gebildet ist.

3. Optische Leseeinrichtung nach Anspruch 2, dadurch gekennzeichnet, daß die Maske durch eine der vorderen Seitenkanten des Chips gebildet ist.

4. Optische Leseeinrichtung nach Anspruch 1, dadurch gekennzeichnet, daß die Lichtsendequelle (1) durch einen Laser gebildet ist, der in einem Halbleiterchip verwirklicht ist, wobei die Maske (1") durch eine der vorderen Ecken des Chips gebildet ist.

5. Optische Leseeinrichtung nach irgendeinem der Ansprüche 2 bis 4, dadurch gekennzeichnet, daß der Halbleiterchip entlang seinen Kristallachsen zu gerichtet ist.

6. Optische Leseeinrichtung nach irgendeinem der Ansprüche 1 bis 5, dadurch gekennzeichnet, daß der Ablenkwinkel (α) des dritten Strahlenbündels größer als der halbe Öffnungswinkel (β) des Fokussierungsmittels bei Betrachtung von der Lichtquelle ist.

7. Optische Leseeinrichtung nach irgendeinem der Ansprüche 1 bis 6, dadurch gekennzeichnet, daß die Erfassungseinrichtung durch wenigstens zwei Photodetektorzellen (70, 71) gebildet ist, die in einer zur Ebene des Aufzeichnungsträgers parallelen Ebene beiderseits einer Ebene angeordnet sind, die zur Ebene des Trägers senkrecht ist und durch den Schnittpunkt der sekundären optischen Achse (02) mit der parallelen Ebene verläuft.

8. Optische Leseeinrichtung nach irgendeinem der Ansprüche 1 bis 7, dadurch gekennzeichnet, daß die Erfassungseinrichtung durch vier Photodetektorzellen (72, 73, 74, 75) gebildet ist, die in einer zur Ebene des Trägers parallelen Ebene kreuzförmig angeordnet sind, wobei sich die Mitte des Kreuzes (Y1) im Schnittpunkt der sekundären optischen Achse (02) mit der parallelen Ebene befindet.

9. Optische Leseeinrichtung nach irgendeinem der Ansprüche 1 bis 8, dadurch gekennzeichnet, daß das Trennmittel (2) durch ein Beugungsgitter, ein doppelbrechendes Gitter oder ein Polarisationstrennprisma wie etwa ein Wollaston-Prisma gebildet ist.

10. Optische Leseeinrichtung nach irgendeinem der Ansprüche 1 bis 9, dadurch gekennzeichnet, daß sie außerdem ein Viertelwellenlängenplättchen aufweist, das sich zwischen dem Trennmittel (4) und dem Aufzeichnungsträger (5) befindet.

**Claims**

1. Device for the optical reading of an optical recording medium of the type comprising:

- a source (1) for emitting a first light beam (F1) along a main optical axis (01),

- a splitter means (2) to direct, along the main optical axis, the first beam towards the surface of the recording medium (5) and to split a second beam (F2) obtained by reflection of the first beam on the surface of the recording medium so as to form a third beam (F'3) directed along a secondary optical axis;

- a focusing means (4) provided between the splitter means and the surface of the recording medium to focus the first beam on the said surface;

- a mask (1', 1") to introduce a disymmetry into the third beam when the first beam F1 is not correctly focused on the recording medium, and

- at least one detection device (7) receiving at least one part of the third beam (F'3) and giving at least one electrical signal expressing the state of focusing of the first beam on the recording medium,

characterized in that the mask (1', 1") is formed by at least one part of the external surface of the light-emitting source (1), the splitter means (2) being positioned and made so that the focusing point of the third beam (F'3) falls on the said external surface part of the light source when the optical reading beam (F1) is correctly focused on the recording medium.

2. Optical reading device according to Claim 1, characterized in that the light-emitting source (1) is formed by a laser made in a semiconductor chip, the mask (1') being formed by one of the front edges of the chip.

3. Optical reading device according to Claim 2, characterized in that the mask is formed by one of the front lateral edges of the chip.

4. Optical reading device according to Claim 1, characterized in that the light-emitting source (1) is formed by a laser made in a semiconductor chip, the mask (1") being formed by one of the front corners of the chip.

5. Optical reading device accoding to any one of Claims 2 to 4, characterized in that the semiconductor chip is trued along in its crystalline axes.

6. Optical reading device according to any one of Claims 1 to 5, characterized in that the angle of deflection ($\alpha$) of the third beam is greater than the half-angle of aperture ($\beta$) of the focusing means, seen from the light source.

7. Optical reading device according to any one of Claims 1 to 6, characterized in that the detection device is constituted by at least two photodetector cells (70, 71) positioned in a plane parallel to the plane of the recording medium, on either side of a plane perpendicular to the plane of the medium and passing through the meeting point of the secondary optical axis (02) with the parallel plane.

8. Optical reading device according to any one of Claims 1 to 7, characterized in that the detection device is constituted by four photodetector cells (72, 73, 74, 75), arranged in the form of a cross in a plane parallel to the plane of the medium, the centre of the cross (Y1) being at the meeting point of the secondary optical axis (02) with the parallel plane.

9. Optical reading device according to any one of Claims 1 to 8, characterized in that the splitter means (2) is formed by a diffraction grating, a birefringent grating or a polarization splitter prism such as a Wollaston prism.

10. Optical reading device according to any one of Claims 1 to 9, characterized in that it further includes a quarter wave plate located between the splitter means (4) and the recording medium (5).

# FIG.1

FIG.2

FIG.3

EP 0 423 295 B1

FIG.4

FIG.5